# EUROPÄISCHE PATENTANMELDUNG

(11) **EP 1 747 765 A1**
(43) Veröffentlichungstag der Anmeldung: **31.01.2007**
(21) Anmeldenummer: 06118125.1
(22) Anmeldetag: 28.07.2006
(51) Int. Cl.: A61C 13/00, A61C 5/10, C25D 1/14

(54) **Verfahren zum Herstellen eines glasinfiltrierten dentalen Keramikgerüstes**

(30) Priorität: 29.07.2005 DE 102005035755
(71) Anmelder: BEGO Bremer Goldschlägerei Wilh. Herbst GmbH & Co. KG, 28359 Bremen (DE)
(72) Erfinder: Dierkes, Stephan, 28195, Bremen (DE); Wiest, Thomas, 36088, Hünfeld (DE); Lambrecht, Heinz, 28201, Bremen (DE)
(74) Vertreter: Eisenführ, Speiser & Partner

(57) **Zusammenfassung**

Beschrieben wird ein Verfahren zum Herstellen eines glasinfiltrierten dentalen Keramikgerüstes, insbesondere für eine Krone oder Brücke, mit folgenden Schritten:
- Bereitstellen oder Herstellen eines porösen dentalen Keramikgerüstes (2; 12;22),
- vollständiges Glasinfiltrieren des porösen dentalen Keramikgerüstes durch dessen Kontaktieren mit einem Glasschmelzereservoir (3; 13; 23) umfassend eine zum vollständigen Glasinfiltrieren des porösen dentalen Keramikgerüstes mehr als ausreichende Menge an geschmolzenem Glas, wobei das poröse dentale Keramikgerüst (2; 12; 22) (i) in das Glasschmelzereservoir (3; 13; 23) eingetaucht oder (ii) über eine oder mehrere Kapillaren (27) mit dem Glasschmelzereservoir verbunden wird, und,
- Abbrechen des Kontaktes zwischen dem vollständig glasinfiltrierten dentalen Keramikgerüst (2; 12; 22) und dem Glasschmelzereservoir (23), im Falle (i) durch Entfernen des glasinfiltrierten dentalen Keramikgerüstes aus dem noch flüssigen Glas des Glasschmelzereservoirs bzw. im Falle (ii) durch Entfernen des Glasschmelzereservoirs vom Keramikgerüst, mit oder ohne die Kapillare(n) (27).

## Beschreibung

Die vorliegende Erfindung betrifft ein Verfahren zum Herstellen eines glasinfiltrierten dentalen Keramikgerüstes, insbesondere für eine Krone oder Brücke.

Glasinfiltrierte dentale Keramikgerüste und Verfahren zu deren Herstellung sind bereits bekannt. Verwiesen sei insoweit auf die Dokumente EP-B-0 241 384 (entspricht US 4,772,436), WO 99/50480 A1 und DE 198 52 740 A1.

Gemäß EP-B-0 241 384 (US 4,772,436) wird gemäß einer ersten alternativen Vorgehensweise eine wasserbasierte Glaspaste eingesetzt, die beim Erhitzen auf eine bestimmte Temperatur schmilzt und sich innerhalb des gesamten Porenvolumens eines porösen dentalen Keramikgerüstes verteilt. Gemäß einer zweiten alternativen Verfahrensgestaltung wird ein Bett aus Glaspulver bereitgestellt, in welches das poröse dentale Keramikgerüst gesetzt wird; das Ensemble wird dann auf die gewünschte Temperatur erhitzt, so dass das Glas schmilzt und auf Grund der vorhandenen Kapillarkräfte das gesamte Porennetzwerk des dentalen Keramikgerüstes infiltriert (imprägniert).

Gemäß WO 99/50480 wird auf einem elektrophoretisch abgeschiedenen Keramikkörper eine Schicht von schmelzbarem Glas abgeschieden. Anschließend wird zum Zwecke der Glasinfiltration (Glasimprägnierung) bei einer Temperatur von beispielsweise 1100 °C gesintert.

Gemäß DE 198 52 740 A1 wird ein dentales Keramikgerüst durch Sintern aus einem pulverförmigen Material hergestellt. Ohne Entnahme des gesinterten Gerüstes aus dem Keramikofen wird in einer im Keramikofen befindlichen Auftragsvorrichtung eine Glasmasse aufgeschmolzen und das flüssige Glas von der Auftragsvorrichtung auf das Gerüst aufgetragen. Es findet dann in üblicherweise die Glasinfiltrierung statt.

Bereits in der DE 198 52 740 A1 wird es als problematisch erkannt, dass die üblichen Glasinfiltrationsverfahren mit beträchtlichen Energie- und Zeitverlusten verbunden sind. Gemäß der DE 198 52 740 A1 wird dementsprechend die bereits erwähnte Auftragsvorrichtung vorgeschlagen, die es möglich macht, das Auftragen von flüssigem Glas ohne Entnahme des Gerüstes aus dem Keramikofen vorzusehen. Die Durchführung des Verfahrens hat sich jedoch in der Praxis als vergleichsweise kompliziert erwiesen.

Es war daher die Aufgabe der vorliegenden Erfindung, ein einfaches Verfahren zum Herstellen eines glasinfiltrierten dentalen Keramikgerüstes anzugeben. Weitere Aspekte der Aufgabenstellung ergeben sich aus den nachfolgenden Bemerkungen zu den Vorteilen erfindungsgemäßer Verfahren.

Die vorliegende Erfindung betrifft gemäß einem ersten Aspekt ein Verfahren zum Herstellen eines glasinfiltrierten dentalen Keramikgerüstes, insbesondere für eine Krone oder Brücke, mit folgenden Schritten:
- Bereitstellen oder Herstellen eines porösen dentalen Keramikgerüstes,
- vollständiges Glasinfiltrieren des porösen dentalen Keramikgerüstes durch dessen Kontaktieren mit einem Glasschmelzereservoir umfassend eine zum vollständigen Glasinfiltrieren des porösen dentalen Keramikgerüstes mehr als ausreichende Menge an geschmolzenem Glas, wobei das poröse dentale Keramikgerüst (i) in das Glasschmelzereservoir eingetaucht oder (ii) über eine oder mehrere Kapillaren mit dem Glasschmelzereservoir verbunden wird, und,
- Abbrechen des Kontaktes zwischen dem vollständig glasinfiltrierten dentalen Keramikgerüst und dem Glasschmelzereservoir, im Falle (i) durch Entfernen des glasinfiltrierten dentalen Keramikgerüstes aus dem noch flüssigen Glas des Glasschmelzereservoirs bzw. im Falle (ii) durch Entfernen des Glasschmelzereservoirs vom Keramikgerüst, mit oder ohne die Kapillare(n).

Erfindungsgemäß wird der Kontakt zwischen dem vollständig glasinfiltrierten dentalen Keramikgerüst und dem Glasschmelzereservoir vorzugsweise abgebrochen, dass keine oder eine nur geringe Glasschicht auf dem Keramikgerüst verbleibt oder ausgebildet wird, entsprechende Nachbearbeitungsschritte am glasinfiltrierten dentalen Keramikgerüst können deshalb entfallen oder sind nur in geringerem Umfang erforderlich.

Da anderseits der Kontakt zwischen Glasschmelzereservoir und (zunächst porösem, dann glasimprägniertem) dentalen Keramikgerüst bis zur vollständigen Glasinfiltration aufrecht erhalten bleibt, ist die Qualität des fertigen glasinfiltrierten dentalen Keramikgerüstes gewährleistet, so dass der Prozess des Glasinfiltrierens nicht wiederholt werden muss.

Bei der Verfahrensgestaltung (i), in der das poröse dentale Keramikgerüst in ein Glasschmelzereservoir eingetaucht und (nach ausreichender Infiltrationszeit) der Kontakt zwischen vollständig glasinfiltriertem dentalen Keramikgerüst und Glasschmelzereservoir durch Entfernen des glasinfiltrierten dentalen Keramikgerüstes aus dem noch flüssigen Glas des Glasschmelzereservoirs abgebrochen wird, geschieht das Entfernen des glasinfiltrierten dentalen Keramikgerüstes aus dem Glasschmelzereservoir so langsam und bei einer Temperatur, die soweit über dem Schmelzpunkt des Glases liegt, dass keine (oder nur eine sehr dünne) Glasschicht auf dem Keramikgerüst verbleibt oder ausgebildet wird. Beim Entfernen des glasinfiltrierten dentalen Keramikgerüstes aus dem Glasschmelzereservoir wird überschüssiges Glas wohl auf Grund der Oberflächenspannung des Glases und der Schwerkraft vom Keramikgerüst in das Glasschmelzereservoir hinein abgezogen, so dass keine bzw. nur eine sehr dünne Glasschicht (oder Tropfen) auf dem Keramikgerüst verbleibt oder ausgebildet wird. Die gegebenenfalls zurückbleibende Menge wird stark von den Verfahrensparametern (Geschwindigkeit) und der Viskosität der Glasschmelze beeinflusst.

Vorzugsweise wird bei der soeben erläuterten Verfahrensgestaltung während des Eintauchens und des Entfernens (Herausnehmens) des dentalen Keramikgerüstes das Glasschmelzereservoir in seiner Position gehalten und das dentale Keramikgerüst bewegt. Zur Bewegung des dentalen Keramikgerüstes in das Glasschmelzereservoir hinein und aus demselben heraus wird das Keramikgerüst beispielsweise an einem Draht aus einem temperaturbeständigen Metall (wie z. B. Platin) befestigt, dieser Draht nach oben hin durch eine in der Ofendecke vorgesehene Öffnung herausgeführt und die Anordnung aus Keramikgerüst und Draht mittels einer üblichen Hub-Senk-Vorrichtung auf- oder abwärts bewegt. Alternativ kann eine Hebe- und Senkvorrichtung für das Glasreservoir vorhanden sein.

EP-B-0 241 384 beschreibt das Handaufschlickern von Glaspulver auf das Gerüst bzw. das Setzen des Keramikgerüsts in ein Pulverbett. In beiden Fällen ist vom Zahntechniker die Menge an benötigtem Glaspulver nur schwer zu schätzen. Benutzt er zu wenig, muss er einen zusätzlich Glasinfiltrationsgang vorsehen. Deshalb bringt der erfahrene Zahntechniker - um sicher eine vollständige Glasinfiltration zu erreichen - immer zuviel Glaspulver auf. Ein Überschuss von deutlich mehr als 10 % (bezogen auf die benötigte Glasmasse) ist normal. Dieser Überschuss muss aber nachträglich sehr aufwendig durch Schleifen und Sandstrahlen entfernt werden. Nachteilig ist auch der hohe Preis des Glases. Auf Grund des Materialwerts sollte mit dem Glas sparsam umgegangen werden. Durch das erfindungsgemäße Entfernen des bereits vollständig infiltrierten Keramikgerüstes aus dem Glas des Glasreservoirs ist es möglich und bevorzugt, mit Glasüberschüssen von weniger als 2 Gew.-% (bezogen auf die zur vollständigen Glasinfiltration benötigte Glasmasse) zu arbeiten.

Bei der alternativen erfindungsgemäßen Verfahrensgestaltung (ii), bei der das poröse dentale Keramikgerüst über eine oder mehrere Kapillaren mit dem Glasschmelzereservoir verbunden wird, gibt es auf Grund der Kapillare(n) keinen direkten Kontakt zwischen Glasschmelzreservoir und dem Keramikgerüst. Bevorzugt verbleiben die Kapillaren bei Entfernung des Glasschmelzereservoirs zunächst am Keramikgerüst. Sie können dann vom Keramikgerüst abgebrochen werden, vor oder nach Abkühlung und Erstarrung des Glases innerhalb des Keramikgerüstes. Das Entfernen des Glasschmelzereservoirs vom Keramikgerüst wird aber vorzugsweise vor dem Erstarren des Glases vorgenommen. Das Trennen des Kontakts zwischen Kapillare und Keramikgerüst erfolgt vorzugsweise erst nach dem Abkühlen des Keramikgerüstes und zwar mechanisch. Das Trennen der Kontaktpunkte kann allgemein (a) an dem Berührungspunkt zwischen Kapillare(n) und Glasreservoir und/oder (b) an dem Berührungspunkt zwischen Kapillare(n) und Keramikgerüst erfolgen; das Keramikgerüst wird hierzu vom Glasreservoir abgehoben und/oder das Glasreservoir fortbewegt und/oder die Kapillare(n) abgebrochen.

In manchen Fällen ist es insbesondere unter dem Gesichtspunkt der guten Handhabbarkeit sinnvoll, das gesamte Ensemble aus Keramikgerüst, Kapillaren und Glasschmelzereservoir abkühlen zu lassen und erst dann das Keramikgerüst von den Kapillaren abzutrennen und zu entfernen.

Der Einsatz von Kapillaren, die beispielsweise aus einem keramischen Material wie Aluminiumoxid bestehen können, ist vorteilhaft, weil dabei die Zufuhr einer zu großen Glasmenge zum dentalem Keramikgerüst (welche zur Ausbildung einer Glasschicht auf dem Keramikgerüst führen könnte) sicher vermieden werden kann. Solange auf Grund der Kapillarwirkung der Poren des dentalen Keramikgerüstes eine Saugwirkung besteht, fließt flüssiges Glas aus dem Glasschmelzereservoir durch die eingesetzten Kapillaren in das Keramikgerüst. Sobald die Kapillarwirkung innerhalb des sich füllenden Keramikgerüstes ausbleibt, fließt kein weiteres flüssiges Glas mehr in Richtung auf das Keramikgerüst. Auf der Oberfläche des Keramikgerüstes bildet sich keine Glasschicht.

Vorzugsweise wird das Glasschmelzereservoir (a) zum Kontaktieren mit dem Keramikgerüst und (b) beim Abbrechen des Kontaktes in seiner Position gehalten und das dentale Keramikgerüst bewegt. Hinsichtlich bevorzugter Ausgestaltungen gilt das zuvor Gesagte entsprechend.

In einer besonders bevorzugten Ausgestaltung wird das poröse dentale Keramikgerüst zunächst mit einer oder mehreren Kapillaren versehen und das so erhaltene Ensemble aus Keramikgerüst und Kapillare(n) dann so mit einem bereitgestellten Glasschmelzereservoir kontaktiert, dass nur die Kapillare(n) in das Glasschmelzereservoir eintaucht (eintauchen).

Gemäß einem zweiten Aspekt betrifft die vorliegende Erfindung ein Verfahren zum Herstellen eines glasinfiltrierten dentalen Keramikgerüstes, insbesondere für eine Krone oder Brücke, mit folgenden Schritten:
- Bereitstellen oder Herstellen eines porösen dentalen Keramikgerüstes,
- Bereitstellen eines Glasformlings, der (i) auf das poröse dentale Keramikgerüst aufsetzbar ist und (ii) eine Glasmenge umfasst, die zum vollständigen Glasinfiltrieren des porösen dentalen Keramikgerüstes ausreicht,
- Aufsetzen des Glasformlings auf das poröse dentale Keramikgerüst,
- Schmelzen des aufgesetzten Glasformlings, so dass die Poren des dentalen Keramikgerüstes glasinfiltriert werden.

Vorteilhaft bei dieser Ausgestaltung gemäß dem zweiten Aspekt der vorliegenden Erfindung ist, dass der Glasformling eine definierte Glasmenge umfassen kann. Vorzugsweise ist die Glasmenge des Glasformlings so auf die (ermittelte) Porosität des keramischen Grünkörpers abgestimmt, dass das zunächst vorhandene Porenvolumen exakt ausgefüllt wird und kein überschüssiges bzw. nur eine sehr geringe Menge an Glas nach abgeschlossener Glasinfiltration auf der Außenfläche des dentalen Keramikgerüstes verbleibt. Das Porenvolumen und damit die benötigte Masse an Glas ist recht präzise durch die Masse des keramischen Gerüsts zu bestimmen, da die relative Porosität nur in vernachlässigbarem Umfang variiert.

Vorzugsweise besitzt sich der Glasformling die Gestalt eines Hütchens oder einer Linse, das bzw. die auf das poröse dentale Keramikgerüst aufsetzbar ist.

Die erfindungsgemäßen Verfahren umfassen vorzugsweise die folgenden Schritte zur Herstellung des porösen dentalen Keramikgerüstes:
- elektrophoretisches Abscheiden eines keramischen Grünkörpers auf einer Abscheidungselektrode,
- Sintern des keramischen Grünkörpers zu einem porösen dentalen Keramikgerüst sowie
- vorzugsweise Nachbearbeiten des dentalen Keramikgerüstes.

Die Nachbearbeitung kann dabei beispielsweise ein oberflächliches Schleifen und/oder das Auftragen zusätzlicher (Schlicker-)Schichten umfassen.

Als keramische Materialien zur Herstellung des dentalen Grünkörpers und des porösen dentalen Keramikgerüstes werden vorzugsweise Spinell (MgAl₂O₄), Aluminiumoxid, Zirkoniumdioxid oder eine Mischung aus Aluminiumoxid und Zirkoniumdioxid verwendet. Verwendet werden vorzugsweise Pulver mit einer zumindest bimodalen Partikelgrößenverteilung, es können aber auch mehrmodale Pulvermischungen verwendet werden. Die relative Porosität eines keramischen Grünkörpers, der zur Herstellung eines erfindungsgemäß einzusetzenden porösen dentalen Keramikgerüstes vorgesehen ist, liegt vorzugsweise unterhalb von 40%, vorzugsweise unterhalb von 30%. Der keramische Grünkörper wird vorzugsweise bei Temperaturen zwischen 1000 und 1200°C angesintert; die keramischen Partikel des Grünkörpers sintern dabei an ihren Berührungspunkten zusammen. Hiermit verbunden ist eine Festigkeitssteigerung, ohne dass dabei die Geometrie stark verändert wird. Die relative Längenänderung der keramischen Partikel beim Sintern liegt bevorzugt unter 0,1%, vorzugsweise unter 0,05%. Das Glasinfiltrieren (der Glasinfiltrationsbrand) erfolgt vorzugsweise bei einer Temperatur, die um 0-300K unterhalb der Sintertemperatur liegt, vorzugsweise 10-100K unterhalb der Sintertemperatur.

Nachfolgend wird die vorliegende Erfindung anhand von Ausführungsbeispielen unter Bezugnahme auf die beigefügten Figuren näher erläutert. Es stellen dar:
Es stellen dar:
   - Fig. 1:: Schematische Darstellung einer Vorrichtung zur Durchführung eines bevorzugten erfindungsgemäßen Verfahrens, bei dem ein poröses dentales Keramikgerüst in ein Glasschmelzereservoir eintaucht.
   - Fig. 2:: Schematische Darstellung einer alternativen Vorrichtung zur Durchführung eines bevorzugten erfindungsgemäßen Verfahrens, bei dem ein poröses dentales Keramikgerüst in ein Glasschmelzereservoir eintaucht.
   - Fig. 3:: Schematische Darstellung einer Vorrichtung zur Durchführung eines erfindungsgemäßen Verfahrens, bei dem ein poröses dentales Keramikgerüst über mehrere Kapillaren mit einem Glasschmelzereservoir verbunden wird.
   - Fig. 4a-c:: Schematische Darstellungen zu einem erfindungsgemäßen Verfahren, bei dem ein linsenförmiger Glasformling eingesetzt wird.

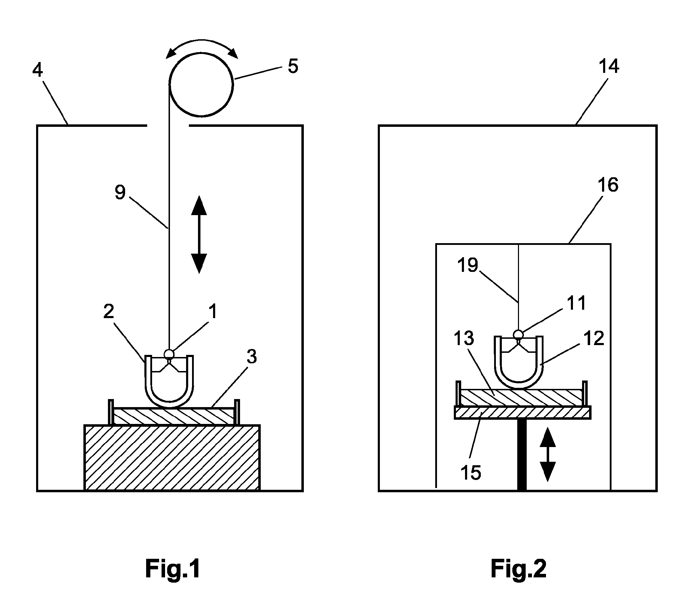

Die in Fig. 1 im Betrieb dargestellte Vorrichtung umfasst eine Klemmeinrichtung 1 aus Platin (nachfolgend: Platinklemme) zur Befestigung an und zum Tragen eines porösen dentalen Keramikgerüstes 2 in Form einer Krone (Material z.B. Spinell). Das poröse dentale Keramikgerüst wurde beispielsweise durch Sintern eines entsprechenden keramischen Grünkörpers bei 1180°C hergestellt, wobei der keramische Grünkörper wiederum beispielsweise durch elektrophoretische Abscheidung auf einer Abscheidungselektrode erzeugt wurde und eine relative Porosität von 29,5% besitzt.

Die Vorrichtung gemäß Fig. 1 umfasst zudem eine nur schematisch dargestellte Hebe- und Senkvorrichtung 5, die einen dünnen Platindraht (Platinfaden) 9 umfasst, der über eine elektrisch angetriebene Rolle geführt ist. Hebe- und Senkrichtung sind durch einen Doppelfeil gezeigt; die Rotationsrichtungen der Rolle sind ebenfalls durch einen Doppelfeil dargestellt.

Die in Fig. 1 dargestellte Vorrichtung umfasst ferner nur einen schematisch dargestellten Ofen 4 mit einer Öffnung in der Ofendecke, durch welche hindurch der Platindraht der Hebe- und Senkvorrichtung 5 geführt ist. Die Rolle der Hebe-und Senkvorrichtung 5 befindet sich außerhalb des Ofens, die Platinklemme 1 mit dem daran befestigten Keramikgerüst 2 befindet sich innerhalb des Ofens 4. Unterhalb des Keramikgerüstes 2 angeordnet ist ein Glasreservoir, welches im Betriebszustand des Ofens geschmolzen ist, das heißt flüssiges Glas umfasst. Das Glasreservoir steht auf einem feuerfesten Sockel.

Zur Durchführung eines erfindungsgemäßen Verfahrens wird die Hebe- und Senkvorrichtung 5 so betätigt, dass das Keramikgerüst 2 aus einer nicht gezeigten Ausgangsposition herabgelassen wird in das Bad aus flüssigem Glas, das heißt in das Glasschmelzereservoir 3. Es wird dabei Sorge getragen, dass kein flüssiges Glas von oben in das Keramikgerüst 2 eindringt; die später dem zu restaurierenden Zahn zugewandte Innenseite des Keramikgerüstes (die gemäß Fig. 1 die Platinklemme 1 kontaktiert) wird also nicht direkt mit Glas kontaktiert. Nach dem Eintauchen des Keramikgerüstes 2 in das Glasschmelzereservoir dringt das geschmolzene Glas in die Poren des Keramikgerüstes 2 ein, und auf Grund der Kapillarwirkung innerhalb des Porensystems wird das Keramikgerüst 2 vollständig glasinfiltriert. Nach einer ausreichend langen Infiltrationszeit wird der Kontakt zwischen dem dann vollständig glasinfiltrierten dentalen Keramikgerüst 2 und dem Glasschmelzereservoir 3 dadurch abgebrochen, dass das glasinfiltrierte dentale Keramikgerüst 2 aus dem noch flüssigen Glas des Glasschmelzereservoirs 3 herausgefahren wird. Hierzu wird wiederum die Hebe-und Senkvorrichtung 5 betätigt. Das Glasinfiltrieren erfolgt z.B. bei 1110°C.

Das Herausfahren (Entfernen) des glasinfiltrierten dentalen Keramikgerüstes 2 aus dem Glasschmelzereservoir 3 (bzw. dem darin enthaltenen Glas) erfolgt so langsam und bei einer Temperatur, die so weit über dem Schmelzpunkt des Glases liegt, dass keine oder eine nur sehr dünne Glasschicht auf der Außenfläche des Keramikgerüstes 2 verbleibt oder ausgebildet wird.

Fig. 2 zeigt eine Vorrichtung, die der aus Fig. 1 in ihrer Funktionsweise recht ähnlich ist. Es ist jedoch keine Hebe- und Senkvorrichtung für Platinklemme und Keramikgerüst vorgesehen, sondern eine Hebe- und Senkvorrichtung 15 für ein Glasreservoir 13. Das Keramikgerüst 12 ist an einer Platinklemme 11 befestigt, die über einen Platindraht 19 an einem Gerüstbügel 16 aufgehängt ist.

Die Vorrichtung gemäß Fig. 2 umfasst einen Ofen 14, innerhalb dessen die Hebe- und Senkvorrichtung 15, das Glasreservoir 13 sowie der Gerüstbügel 16 mit Platindraht 19 und daran angebrachter Platinklemme 11 angeordnet sind.

Zur Durchführung eines erfindungsgemäßen Verfahrens wird analog zu der Vorgehensweise gemäß Fig. 1 vorgegangen. Mittels der Hebe- und Senkvorrichtung 15 für das Glasreservoir 13 wird dieses in Kontakt mit dem porösen dentalen Keramikgerüst 12 gebracht, und nach erfolgter Glasinfiltration wird durch Absenken der Hebe- und Senkvorrichtung 15 der Kontakt zwischen dem Glasreservoir 13 und dem porösen dentalen Keramikgerüst 12 wieder abgebrochen.

Hinsichtlich weiterer Einzelheiten sei auf die Ausführungen zu der Vorrichtung gemäß Fig. 1 und der entsprechenden Verfahrensgestaltung verwiesen.

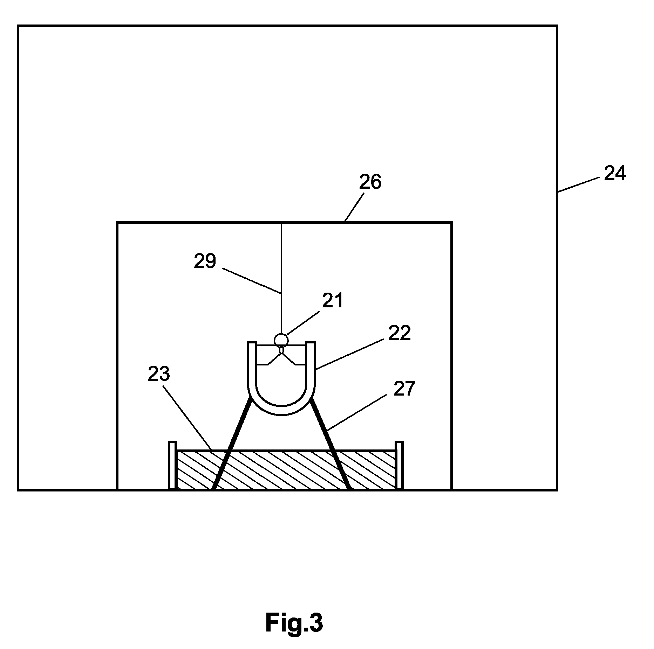

Die Vorrichtung gemäß Fig. 3 ist zur Durchführung eines alternativen erfindungsgemäßen Verfahrens vorgesehen, bei dem Kapillaren zum Einsatz kommen.

Die Vorrichtung gemäß Fig. 3 umfasst einen Ofen 24, einen Gerüstbügel 26, der als Aufhängung für einen Platindraht 29 mit Platinklemme 21 dient, ein

Glasreservoir 23 sowie Kapillaren 27. Ein poröses dentales Keramikgerüst 22 in Form einer Krone ist an der Platinklemme 21 befestigt und kontaktiert über seine Außenflächen die Kapillaren 27, welche wiederum in das Glasreservoir 23 eintauchen.

Im Betrieb des Ofens ist das Glas im Glasreservoir 23 geschmolzen und tritt über die Kapillaren 27 in Kontakt mit dem porösen dentalen Keramikgerüst 22. Ein direkter Kontakt zwischen Keramikgerüst 22 und Glasreservoir 23 besteht hingegen nicht. Auf Grund der Kapillarwirkung der Poren des dentalen Keramikgerüstes 22 besteht eine Saugwirkung, so dass flüssiges Glas aus dem Glasschmelzereservoir 23 durch die Kapillaren 27 hindurch in das Keramikgerüst 22 eindringt und dieses infiltriert. Sobald die Kapillarwirkung innerhalb des sich füllenden Keramikgerüstes 22 ausbleibt, fließt kein weiteres flüssiges Glas mehr aus dem Glasreservoir 23 in Richtung auf das Keramikgerüst 22. Es wird somit vermieden, dass sich auf der äußeren, dem Glasreservoir 23 zugewandten und die Kapillaren kontaktierenden Oberfläche des Keramikgerüstes 22 eine Glasschicht ausbildet. Nach vollständiger Glasinfiltration wird bei Einsatz einer Vorrichtung gemäß Fig. 3 der Ofen 24 abgekühlt. Das Glas innerhalb des dentalen Keramikgerüstes 22, den Kapillaren 27 und des Glasreservoirs 23 erstarrt dabei.

Nach ausreichender Abkühlung wird beispielsweise zunächst das Glasreservoir 23 entfernt und dann der Kontakt zwischen Kapillaren 27 und Keramikgerüst 22 getrennt, indem die Kapillaren am Berührungspunkt mit dem Keramikgerüst abgebrochen werden. Das vollständig glasinfiltrierte Keramikgerüst kann dann aus dem abgekühlten Ofen 24 entnommen werden.

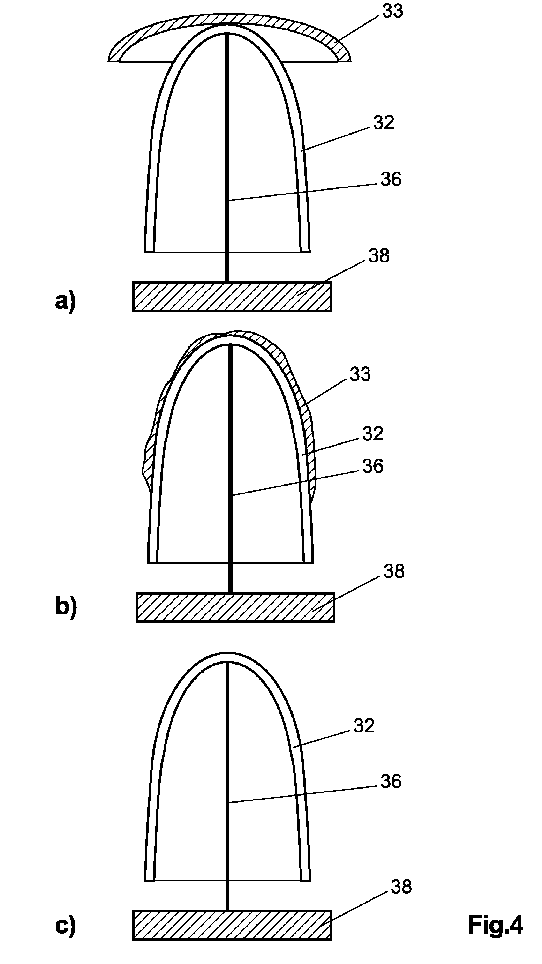

Fig. 4 betrifft den zweiten Aspekt der vorliegenden Erfindung, wonach ein Glasformling eingesetzt wird.

In Fig. 4a ist schematisch ein poröses dentales Keramikgerüst 32 abgebildet, welches von einem temperaturbeständigen Tragstäbchen 36 getragen wird. Das Tragstäbchen 36 ist an einem Fußteil 38 befestigt.

Auf das Keramikgerüst 32 aufgesetzt ist ein Glasformling 33 in Form einer Glaslinse. Die Masse des Glasformlings 33 ist an das Porenvolumen des keramischen Gerüstes 32 so angepasst, dass ein Glasüberschuss im Bereich von 1 bis 2 Gew.-% (bezogen auf die zur vollständigen Glasinfiltration des Keramikgerüstes beschichtete Glasmasse) vorliegt.

Zum Zwecke der Glasinfiltration wird die Anordnung gemäß Fig. 4a soweit erhitzt, bis der Glasformling 33 zu schmelzen beginnt.

In Fig. 4b dargestellt ist der Zustand der Anordnung, nachdem der Glasformling 33 geschmolzen ist. Das geschmolzene Glas hat sich seitlich an die Außenfläche des dentalen Keramikgerüstes 32 angelegt, und auf Grund der Kapillarwirkung des Porensystems des Keramikgerüstes dringt das geschmolzene Glas in das Keramikgerüst ein.

Nach vollständiger Füllung der Poren des Keramikgerüstes 32 mit Glas ist der Infiltrationsvorgang abgeschlossen. Die geringe Menge an überschüssigem Glas verbleibt als äußerst dünne Glasschicht auf der Außenfläche des Keramikgerüstes 32. In Fig. 4c ist die entsprechende Anordnung dargestellt, wobei die dünne Schicht des aus der Außenfläche angeordneten Glases nicht gezeichnet ist.

## Patentansprüche

1. Verfahren zum Herstellen eines glasinfiltrierten dentalen Keramikgerüstes, insbesondere für eine Krone oder Brücke, mit folgenden Schritten:
- Bereitstellen oder Herstellen eines porösen dentalen Keramikgerüstes (2; 12; 22),
- vollständiges Glasinfiltrieren des porösen dentalen Keramikgerüstes durch dessen Kontaktieren mit einem Glasschmelzereservoir (3; 13; 23) umfassend eine zum vollständigen Glasinfiltrieren des porösen dentalen Keramikgerüstes mehr als ausreichende Menge an geschmolzenem Glas, wobei das poröse dentale Keramikgerüst (2; 12; 22) (i) in das Glasschmelzereservoir (3; 13; 23) eingetaucht oder (ii) über eine oder mehrere Kapillaren (27) mit dem Glasschmelzereservoir verbunden wird, und,
- Abbrechen des Kontaktes zwischen dem vollständig glasinfiltrierten dentalen Keramikgerüst (2; 12; 22) und dem Glasschmelzereservoir (23), im Falle (i) durch Entfernen des glasinfiltrierten dentalen Keramikgerüstes aus dem noch flüssigen Glas des Glasschmelzereservoirs bzw. im Falle (ii) durch Entfernen des Glasschmelzereservoirs vom Keramikgerüst, mit oder ohne die Kapillare(n) (27).

2. Verfahren nach Anspruch 1, wobei das poröse dentale Keramikgerüst (2; 12; 22) in das Glasschmelzereservoir (3; 13; 23) eingetaucht und der Kontakt zwischen vollständig glasinfiltriertem dentalen Keramikgerüst (2; 12; 22) und Glasschmelzereservoir durch Entfernen des glasinfiltrierten dentalen Keramikgerüstes aus dem Glasschmelzereservoir abgebrochen wird,
wobei das Entfernen des glasinfiltrierten dentalen Keramikgerüstes aus dem Glasschmelzereservoir so langsam und bei einer Temperatur geschieht, die so weit über dem Schmelzpunkt des Glases liegt, dass keine Glasschicht auf dem Keramikgerüst verbleibt oder ausgebildet wird.

3. Verfahren nach Anspruch 1 oder 2, wobei das poröse dentale Keramikgerüst (2; 12; 22) in das Glasschmelzereservoir (3; 13; 23) eingetaucht und der Kontakt zwischen vollständig glasinfiltriertem dentalen Keramikgerüst und Glasschmelzereservoir durch Entfernen des glasinfiltrierten dentalen Keramikgerüstes aus dem Glasschmelzereservoir abgebrochen wird,
wobei während des Eintauchens und des Entfernen des dentalen Keramikgerüstes das Glasschmelzereservoir in seiner Position gehalten und das dentale Keramikgerüst bewegt wird.

4. Verfahren nach Anspruch 1, wobei das poröse dentale Keramikgerüst über eine oder mehrere Kapillaren (27) mit dem Glasschmelzereservoir verbunden wird und der Kontakt zwischen vollständig glasinfiltriertem dentalen Keramikgerüst und Glasschmelzereservoir durch Entfernen des Glasschmelzereservoirs ohne die Kapillare(n) (27) abgebrochen wird.

5. Verfahren zum Herstellen eines glasinfiltrierten dentalen Keramikgerüstes, insbesondere für eine Krone oder Brücke, mit folgenden Schritten:
- Bereitstellen oder Herstellen eines porösen dentalen Keramikgerüstes (32),
- Bereitstellen eines Glasformlings (33), der (i) auf das poröse dentale Keramikgerüst aufsetzbar ist und (ii) eine Glasmenge umfasst, die zum vollständigen Glasinfiltrieren des porösen dentalen Keramikgerüstes (32) ausreicht,
- Aufsetzen des Glasformlings (33) auf das poröse dentale Keramikgerüst (32),
- Schmelzen des aufgesetzten Glasformlings (33), so dass die Poren des dentalen Keramikgerüstes (32) glasinfiltriert werden.

6. Verfahren nach Anspruch 5, wobei der Glasformling die Gestalt eines Hütchens oder einer Linse besitzt, das bzw. die auf das poröse dentale Keramikgerüst aufsetzbar ist.

7. Verfahren nach einem der Ansprüche 1 bis 4, mit folgenden Schritte zur Herstellung des porösen dentalen Keramikgerüstes:
- elektrophoretisches Abscheiden eines keramischen Grünkörpers auf einer Abscheidungselektrode,
- Sintern des keramischen Grünkörpers zu einem porösen dentalen Keramikgerüst sowie
- vorzugsweise Nachbearbeiten des dentalen Keramikgerüstes.
